# EUROPÄISCHE PATENTANMELDUNG

(11) **EP 0 673 598 A1**
(43) Veröffentlichungstag der Anmeldung: **27.09.1995**
(21) Anmeldenummer: 95103559.1
(22) Anmeldetag: 13.03.1995
(51) Int. Cl.: A01K 1/00, F16B 7/02

(54) **Mobile, demontierbare Stall-/Weide-Einrichtung**

(30) Priorität: 26.03.1994 CH 902/94
(71) Anmelder: Beringer, Robert, CH-6345 Neuheim (CH)
(72) Erfinder: Beringer, Robert, CH-6345 Neuheim (CH)
(74) Vertreter: OK pat AG

(57) **Zusammenfassung**

Die vorliegende Erfindung betrifft eine Klemmvorrichtung für die Herstellung von Absperrgattern (**1**) mittels Vierkanthohlprofilstäben und die Enden querverbindenden Aluschienen, die über Pfosten (**2**) kombiniert mit Futtertischen und Durchgängen zu Schafstall- und Weide-Einrichtungen zusammengestellt werden können.

## Beschreibung

Die Erfindung betrifft eine mobile, demontierbare Stall-/Weide-Einrichtung, insbesondere für Schafställe, bestehend aus Verbindungstäben (Pfosten) und Abschrankungsgattern aus Leichtmetall, wobei deren Elemente Vierkanthohlprofilstäbe als Längsverbindungen und U-förmige Aluschienen als Querendverbindungen aufweisen und wobei die Vierkanthohlprofilstäbe mit ihren jeweiligen Enden mit den U-förmigen Aluschienen verbunden sind.

Solche Abschrankungsgatter müssen trotz der Leichtmetallbauweise sehr robust und stabil sein, da sie beispielsweise zum Entmisten und zur gründlichen Stallreinigung und Desinfektion aus dem Stall entfernt werden müssen. Bei solchen Umstellungen kann man nicht davon ausgehen, dass die Elemente der Abschrankungsgatter besonders pfleglich behandelt werden.
Zum anderen erfordert auch die Bedingung der Korosionsbeständigkeit ein hochwertiges Material, wie beispielsweise Aluminium oder eine entsprechende Legierung.

Kommt hinzu, dass solche Stalleinrichtungen im Sommer anstatt in überdachten Festbauten im Freien, auf der Weide und/oder im Hof, aufgestellt werden, was eben eine mobile Bauweise erfordert.

Es geht also darum, zu Verhindern, dass bei mehrmaligen Einsatz und Umbau der Abschrankungsgatter diese einem erheblichen Verschleiss bzw. Verzug der Gitter ausgesetzt sind, der schliesslich zur Unbrauchbarkeit der Teile führt.

Es sind nun Abschrankungsgatter aus Leichtmetall bekannt, bei denen Vierkanthohlprofile als Längsverbindungen dienen und deren Enden jeweils die U-förmigen Querschnitt aufweisende Leichmetallstäbe derart verschraubt sind, dass Löcher vorgesehen werden, die durchschrauben von Längs- und Querverbindung ermöglichen. Diese Art der Konstruktion hat aber den Nachteil, dass eine sehr aufwenige Montage notwendig ist, denn jedes Längsverbindungshohlprofil muss nach dem Zuschneiden auf die erforderliche Länge an seinen beiden Enden mit einer besonders akuraten Querbohrung versehen werden. Kommt hinzu, dass die so gefertigten Elemente der Abschrankungsgatter wenig winkelstabil sind. Das führt weiterhin dazu, dass bei längeren Abschrankungsgittern nicht nur die Querverbindungen an den jeweiligen Enden der Längsverbindungen vorgesehen werden müssen, sondern zusätzliche Querverbindungen auf der Gesamtlänge der Längsverbindung vorgesehen werden müssen, um eine entsprechende Winkelhaltigkeit zu gewährleisten.

Es ist damit Aufgabe der Erfindung, die Nachteile des Standes der Technik zu vermeiden und leicht zu montierende Elemente, die grosse Winkelstabilität aufweisen und kostengünstig herstellbar sind, zu schaffen.

Die Lösung dieses komplexen Problems ist nach der Erfindung hauptsächlich dadurch gekennzeichnet, dass die Vierkanthohlprofilstäbe der Längsverbindungen der Elemente der Abschrankungsgatter in den U-förmigen Aluschienen der Querendverbindungen der Elemente der Abschrankunsggatter mittels in Richtung der Längsverbindungen angeordneten, formschlüssig das Innere der Vierkanthohlprofilstäbe ausfüllenden, Klemmvorrichtungen, gehaltert sind.

Nach einem weiterbildenden Erfindungsmerkmal besteht die Klemmvorrichtung aus einer Basis und einem Keil, die je eine gegensinnig, gleiche schräge Fläche aufweisen, sodass sie funktionell in der Art einer schiefen Ebene aufeinander abgleiten.

Besonders vorteilhaft ist es, wenn die schiefen Flächen der Basis und des Keils jeweils eine Neigung im Bereich von 3 bis 8, insbesondere 5 Grad aufweisen.

Es ist weiterhin empfehlenswert für die Klemmvorrichtung eine in Montagerichtung F um ca. 5 % grössere Breite zu wählen, damit eine erhöhte Anpresskraft erzeugt werden kann.

Im übrigen ist es bei den Ausführungen nach der Erfindung besonders vorteilhaft, dass die Vierkanthohlprofile auf beliebige Längen zugeschnitten werden können und keine weitere Bearbeitung benötigen. d.h. Sie können beispielsweise gegebenen Stallunterteilungen beliebig angepasst werden, da ausser dem Zuschneiden keine weitere Bearbeitung der Vierkanthohlprofile notwendig ist.

Zudem ist der Materialbedarf bei der erfindungsgemässen Lösung gegenüber dem Stand der Technik erheblich geringer, da beim Stand der Technik, eine ganze Reihe von querverbindenden Aluschienen notwendig war, um etwa die gleiche Stabilität zu erreichen, wie sie Absperrgatter nach der Erfindung darstellen.

Anhand der in den Zeichnungen dargestellten Ausführungsbeispiele wird die Erfindung näher erläutert.

Es zeigen:
- **Fig. 1**: Eine typische Anwendung des Ausführungsbeispiels in Form einer Schafstalleinrichtung,
- **Fig. 2**: ein Beispiel einer Querverbindung aus dem Stand der Technik in Seitenansicht,
- **Fig. 3**: ein Beispiel einer Querverbindung aus dem Stand der Technik in Vorderansicht,
- **Fig. 4**: ein Detail des Ausführungsbeispiel von **Fig. 6** in Seitenansicht,
- **Fig. 5**: ein Detail des Ausführungsbeispiel von **Fig. 6** in Vorderansicht,
- **Fig. 6**: eine Gesamtansicht eines Ausführungsbeispiels.

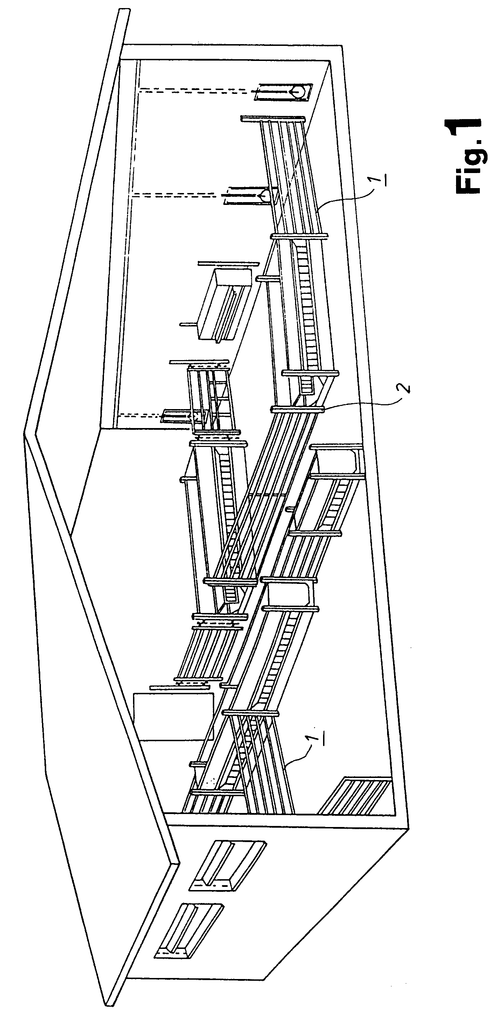

Die in **Fig. 1** dargestellte Schafstalleinrichtung zeigt eine Anordnung verschieden gruppierter Absperrgatter **1** kombiniert mit Futtertischen und Durchgängen ausgesteckt mit und befestigt an Pfosten **2** in einem überdachten Stall.

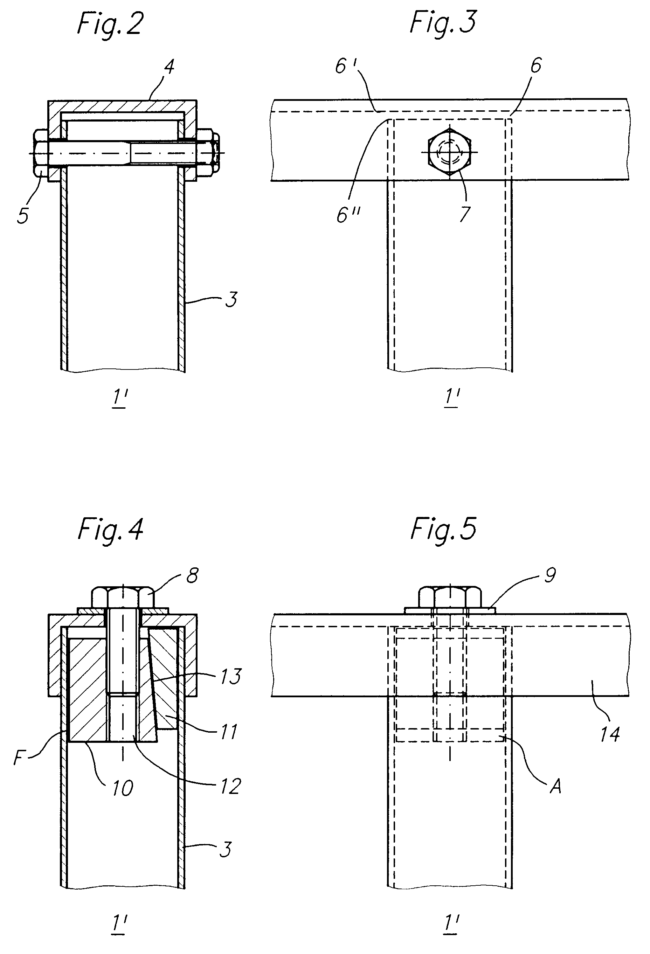

Bei dem in **Fig. 2** gezeigten Detail eines Elementes **1'** eines Absperrgatters **1** handelt es sich um ein Aluminium Vierkanthohlprofilstab **3** von ca. 30 mm Seitenlänge einer Längsverbindung dieses Elementes, das in eine U-förmige Aluschiene **4** einer Querverbindung eines solchen Elementes **1'** einmündet und im Endbereich mit dieser durch eine Durchgangs-Schraube **5** mit den beiden Schenkeln der U-förmigen Aluschiene **4** verbunden ist.

Aufgrund der Bohrungs- und Fertigungstoleranzen muss, um eine einfache Montage sicher zu stellen -siehe **Fig. 3**-, ein gewisser Abstand **6** zwischen dem Ende des Vierkantprofilsstabs **6'** der Längsverbindung und dem Anfang **6''** des Grundes der U-förmigen Aluschiene erhalten bleiben. Dieser Abstand ist schlussendlich ausschlaggebend für die Möglichkeit, dass die beiden Verbindungen eine gewisse Drehung gegeneinander ausführen können, wie stark die Durchgangs-Schraube **5** auch immer angezogen ist; und damit kann eine Winkelstabilität nicht sichergestellt werden.

Zudem ist ein erheblicher Mehraufwand dadurch erforderlich, dass die Vierkantprofilstäbe **3** im Endbereich mit Durchgangslöchern versehen werden müssen, d.h. wenn eine bestimmte Abschrankungsgatterlänge festgelegt worden ist, müssen die Vierkantprofilstäbe nach dem Ablängen qualitativ gut mit entsprechenden Durchgangslöchern ausgerüstet werden, damit über eine Mutter **7** die beiden Teile, der Vierkanthohlprofilstab **3** mit der U-förmigen Aluschiene **4** verbunden werden kann.

In **Fig. 4** als Seitenansich in zum Teil geschnittener Darstellung und in **Fig. 5** als Vorderansicht, ist als Detail ein Ausführungsbeispiel der erfindungsgemässen Vorrichtung dargestellt.

Über eine Zylinderkopfschraube **8** und eine entsprechende Unterlagscheibe **9** ist eine im Innern des Vierkanthohlprofilstabes **3** vorgesehene Basis **10** angeordnet, die mit einem ebenfalls in Längsrichtung angeordneten Keil **11** in Wirkverbindung steht. In der Basis **10** ist ebenfalls in Längsrichtung ein Gewindeloch **12** vorgesehen, in welches die Zylinderkopfschraube **8** eingeschraubt ist.

Die Abmessungen von Basis **10** und Keil **11** sind dabei so gewählt, dass sie bezüglich der Breite insgesamt gemeinsam etwas grösser sind, als der Innenraum des Vierkantprofilstabes **3**.

Sowohl die Basis **10** als auch der Keil **11** umfassen eine gegensinnig gleich steile schräge, ca. 5 Grad geneigte, Fläche **13** die somit gegenseitig in Anlage gebracht, als schiefe Ebene wirken. Das Prinzip der schiefen Ebene wird dazu benutzt bei der Montage von entsprechenden Vierkanthohlprofilstäben **3** in U-förmig angeordneten Aluschienen **4** eine Pressverbindung zwischen Ende der Vierkanthohlprofilstabes und Grund der Aluschiene zu erreichen.

So im Innenbereich der Vierkanthohlprofilstäbe **3** eingeklemmte Basis **10** und Keil **11** erlauben, insbesondere, wenn die Aussenflächen des Vierkantprofilstabes **3** diejenigen sind, die sich noch gegen die Schenkel **14** der Aluschiene **4** abstützen, keinerlei Drehung des Vierkantprofilstabes gegen die Aluschiene. Damit ist eine Winkelbeweglichkeit ausgeschlossen.

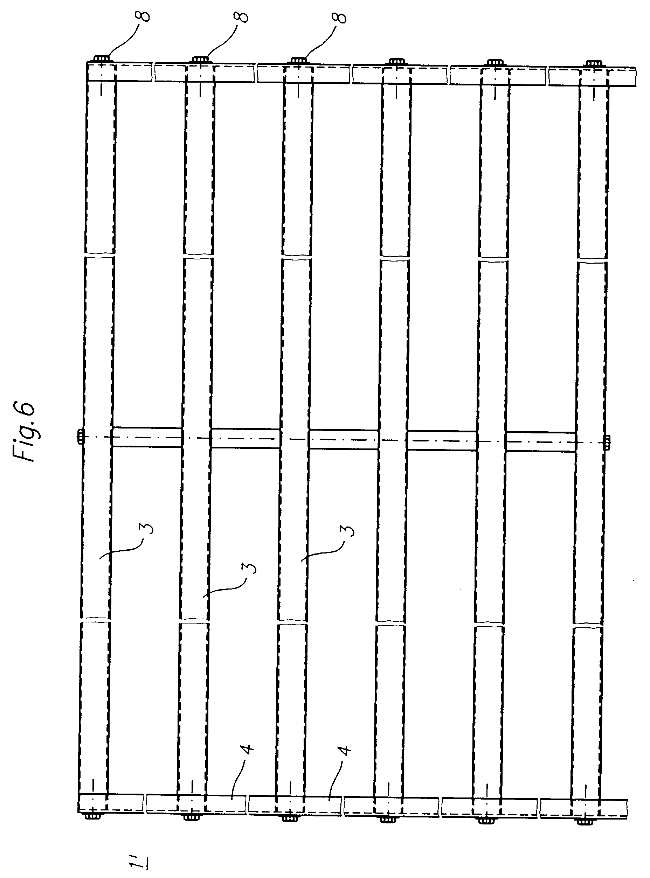

In **Fig. 6** ist Gesamtzusammenstellung eines Elementes **1'** eines Absperrgatters, aufgebaut aus Vierkantprofilstäben **3** als Längsverbindungen und aus U-förmigen Aluschienen **4** als Querendverbindung, wobei die Verbindung über die erfindungsgemässe Klemmvorrichtung (Basis **10**, Keil **11**), angespannt über die Zylinderkopfschraube **8**, realisiert ist.

## Patentansprüche

1. Mobile, demontierbare Stall-/Weide-Einrichtung, insbesondere für Schafställe, bestehend aus Verbindungsstäben (Pfosten) (**2**) und Abschrankungsgattern (**1**) aus Leichtmetall, deren Elemente (**1'**) Vierkanthohlprofilstäbe (**3**) als Längsverbindungen und U-förmige Aluschienen (**4**) als Querverbindungen aufweisen und an den jeweiliegen Enden der Vierkanthohlprofilstäbe (**3**) mit den U-förigen Aluschienen (**4**) verbunden sind,
**dadurch gekennzeichnet,** dass
die Vierkanthohlprofilstäbe (**3**) der Längsverbindungen der Elemente (**1'**) der Abschrankungsgatter (**1**) in den U-förmigen Aluschienen (**4**) der Querendverbindungen der Elemente (**1'**) der Abschrankungsgatter (**1**) mittels in Richtung der Längsverbindungen angeordneten, formschlüssig das Innere der Vierkanthohlprofilstäbe (**3**) ausfüllenden, Klemmvorrichtungen (**10, 11**) gehaltert sind.

2. Mobile, demontierbare Stall-/Weide-Einrichtung nach Anspruch **1**,
**dadurch gekennzeichnet,** dass
die Klemmvorrichtung aus einer Basis (**10**) und einem Keil (**11**) bestehen, die je eine gegensinnig gleiche schräge Fläche (**13**) aufweisen, sodass sie funktionell in der Art einer schiefen Ebene aufeinander abgleiten.

3. Mobile, demontierbare Stall-/Weide-Einrichtung nach Anspruch **2**,
**dadurch gekennzeichnet,** dass
die schrägen Flächen (**13**), im montierten Zustand der Elemente (**1'**) der Absperrgatter (**1**), parallel zu den Schenkeln (**14**) der U-förmigen Aluschiene (**4**) verlaufen.

4. Mobile, demontierbare Stall-/Weide-Einrichtung nach einem der Ansprüche **2** oder **3**,
**dadurch gekennzeichnet,** dass
die schrägen Flächen (**13**) einen Winkel von 3 bis 8 Grad, vorzugsweise von 5 Grad zur Längsrichtung aufweisen.

5. Mobile, demontierbare Stall-/Weide-Einrichtung nach einem der Ansprüche **2** bis **4**,
**dadurch gekennzeichnet,** dass
die Klemmvorrichtung quer zur Längsrichtung, in Richtung **F**, eine um ca. 5 % grössere Breite aufweist, als in Richtung der U-förmigen Aluschiene (**4**).

6. Mobile, demontierbare Stall-/Weide-Einrichtung nach einem der vorangehenden Ansprüche,
**dadurch gekennzeichnet,** dass
der Keil (**11**) der Klemmvorrichtung eine grössere Höhe als die Basis (**10**) aufweist.
